(19) Europäisches Patentamt / European Patent Office / Office européen des brevets

(11) **EP 2 683 579 B1**

(12) **FASCICULE DE BREVET EUROPEEN**

(45) Date de publication et mention de la délivrance du brevet:
**30.08.2017 Bulletin 2017/35**

(21) Numéro de dépôt: **12713221.5**

(22) Date de dépôt: **09.03.2012**

(51) Int Cl.:
**B60S 1/08** *(2006.01)*

(86) Numéro de dépôt international:
**PCT/FR2012/050507**

(87) Numéro de publication internationale:
**WO 2012/120248 (13.09.2012 Gazette 2012/37)**

(54) **PROCÉDÉ ET DISPOSITIF DE CONTRÔLE D'UN MOTEUR ÉLECTRIQUE D'ESSUIE-GLACE**

VERFAHREN UND VORRICHTUNG ZUR STEUERUNG EINES FAHRZEUG-WISCHERMOTORS

METHOD AND DEVICE FOR CONTROLLING THE ELECTRIC MOTOR OF A WINDSHIELD WIPER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.03.2011 FR 1100716**

(43) Date de publication de la demande:
**15.01.2014 Bulletin 2014/03**

(73) Titulaire: **Falgayras S.A.S.**
**31770 Colomiers (FR)**

(72) Inventeur: **CONTRASTI, Eric**
**F-31400 Toulouse (FR)**

(74) Mandataire: **Cabinet BARRE LAFORGUE & associés**
**35, rue Lancefoc**
**31000 Toulouse (FR)**

(56) Documents cités:
**WO-A1-2012/004023          DE-A1-102008 001 816**
**DE-A1-102009 014 767      FR-A1- 2 896 925**
**US-B1- 6 281 649**

EP 2 683 579 B1

**Description**

L'invention concerne un procédé de contrôle d'un moteur électrique d'essuie-glace, notamment un procédé dans lequel l'alimentation électrique est ajustée en fonction de la position du balai d'essuie-glace, ainsi qu'un dispositif de mise en oeuvre d'un tel procédé de contrôle.

On connait différents procédés de contrôle de moteur d'essuie-glace dans lesquels le moteur suit des phases alternatives dans un sens de rotation puis dans un autre, chaque phase correspondant au parcours d'un balai d'essuie-glace sur une glace entre deux positions extrémales. Chaque phase est généralement constituée d'une étape d'accélération du bras d'essuie-glace à partir d'une position de départ et d'une étape de décélération jusqu'à une position finale, entre lesquelles se trouve parfois une étape à vitesse constante.

Ainsi US 6,281,649 prévoit une étape d'accélération constante dans le temps, puis une étape à vitesse constante, et une troisième étape de décélération constante dans le temps, la position du balai d'essuie-glace étant détectée par des capteurs à effet Hall. Cette gestion des essuie-glaces est simple en termes de mouvements réalisés au cours d'une phase de balayage d'une glace, mais complexe car elle implique des calculs lourds qui ne peuvent être mis en oeuvre que par des composants électroniques complexes. Document FR 2 896 925 A montre un procédé de contrôle d'un moteur électrique de balai d'essuie glace tel que décrit dans le préambule de la première revendication et un dispositif de contrôle tel que décrit dans le préambule de la dixième revendication. En effet, la gestion des étapes d'accélération et de décélération sont des étapes très délicates dans lesquelles de nombreux critères entrent en jeu : limites structurelles du bras d'essuie-glace qui risque d'être endommagé en cas de dépassement des positions extrémales, limites mécanique de la transmission cinématique entre le moteur et le bras d'essuie-glace, limites mécaniques du moteur, limites économiques des composants électroniques employés pour contrôler le moteur électrique, etc.

D'autres contraintes peuvent apparaître en fonction du domaine d'application d'un tel système d'essuie-glace. En particulier dans l'aéronautique, de fortes contraintes s'imposent à de tels systèmes dont la sûreté de fonctionnement doit être maximale. Les composants électroniques sont donc choisis pour leur sûreté de fonctionnement. Or, les composants les plus complexes sont souvent les plus à même de présenter des erreurs de fonctionnement.

L'invention vise donc à palier ces inconvénients.

Elle vise aussi en particulier à proposer un procédé de contrôle d'un moteur électrique d'essuie-glace qui permette d'user au minimum la transmission cinématique entre un tel moteur et chaque balai d'essuie-glace et notamment d'en allonger la durée de vie.

L'invention vise également à proposer un tel procédé qui soit compatible avec l'utilisation de composants simples mais sûrs.

L'invention vise en outre un tel procédé qui soit économique à mettre en oeuvre.

L'invention vise en particulier un procédé permettant de réaliser une cinématique complexe de balayage d'une glace mais n'impliquant que des calculs simples pouvant être mis en oeuvre par des composants électroniques simples.

L'invention concerne donc un procédé de contrôle d'un moteur électrique d'essuie-glace, ledit moteur comportant un arbre de sortie rotatif dans deux sens de rotation entre deux positions angulaires extrémales, l'arbre de sortie étant accouplé à au moins un balai d'essuie-glace, dans lequel l'alimentation électrique du moteur est ajustée par une unité électronique de commande en fonction de la position angulaire de l'arbre de sortie du moteur pour suivre, dans l'ordre chronologique, dans chaque sens de rotation de l'arbre de sortie du moteur, sur une course située entre une première position angulaire extrémale, dite position initiale, selon ce sens de rotation de l'arbre de sortie et la seconde position angulaire extrémale, dite position cible, à laquelle l'arbre de sortie change de sens de rotation :

- une étape d'accélération entre la position initiale et une position intermédiaire, dite position de fin d'accélération, située entre la position initiale et la position cible selon ce sens de rotation,
- une étape de décélération entre ladite position de fin d'accélération et la position cible,

caractérisé en ce que, sur au moins l'une des étapes d'accélération et de décélération, l'alimentation électrique du moteur est ajustée par l'unité électronique de commande selon au moins deux lois de commandes distinctes sur au moins deux portions de courses successives.

Dans tout le texte, on désigne par « course » une portion angulaire parcourue par l'arbre de sortie du moteur entre deux positions angulaires quelconques et correspondant au déplacement d'un balai d'essuie-glace accouplé à l'arbre de sortie du moteur. L'arbre de sortie se déplace entre deux positions angulaires extrémales correspondant à des positions du balai d'essuie-glace entre lesquelles ce dernier effectue des allers-retours alternatifs.

Les positions extrémales peuvent cependant changer en fonction de nombreux facteurs. Par exemple, l'amplitude d'essuyage d'un pare-brise d'hélicoptère est avantageusement beaucoup plus grande au moment du décollage et de l'atterrissage, permettant ainsi au pilote d'avoir une vue dégagée sur un grand angle à ces moments. L'amplitude d'essuyage et donc la position des positions extrémales peut donc varier, par exemple en fonction de la vitesse du véhicule.

En outre une position, dite position de parking, angulaire peut être définie au-delà de l'une des positions extrémales. Cette position de parking n'est pas atteinte lors d'aller-retour successifs en fonctionnement : elle est atteinte lors de l'arrêt du balayage. C'est une position correspondant à un rangement du balai d'essuie-glace permettant de maximiser le champ de vision d'un pilote à travers la glace lorsque le système d'essuie-glace n'est pas en fonctionnement.

Dans tout le texte, on désigne par « position initiale » une première position extrémale selon un sens de rotation de l'arbre de sortie, et « position cible » la deuxième position extrémale selon ce même sens de rotation, de sorte que chacune des positions extrémales est alternativement une position initiale et une position cible en fonction du sens de rotation de l'arbre de sortie (et donc du balai d'essuie-glace). Les positions initiale et cible correspondent respectivement à la position extrémale depuis laquelle et vers laquelle le balai d'essuie-glace se déplace pendant une course de balayage d'amplitude complète.

De même, la position de fin d'accélération est définie selon un sens de rotation. Il y a donc une position de fin d'accélération selon chaque sens de rotation. La position de fin d'accélération est une position intermédiaire sur une course complète de balayage entre une position extrémale et une autre. C'est la position à partir de laquelle l'arbre de sortie du moteur n'est plus accéléré.

La position de fin d'accélération peut être choisie en différents endroits de la course complète de balayage en fonction des performances attendues en termes de temps de course d'un balai d'essuie-glace, de respect des limites mécaniques du moteur et/ou de la liaison cinématique, d'étendue de la zone de décélération, etc.

Dans tout le texte le terme « loi de commande » désigne une règle de commande du moteur d'essuie-glace selon laquelle la vitesse du moteur d'essuie-glace est déterminée par l'application d'une fonction spécifique à des données d'entrée (par exemple des données de position de l'essuie-glace, un chronomètre, etc.).

Conformément à l'invention, de nombreuses étapes à lois de commandes distinctes peuvent être appliquées au moteur sur des courses successives situées entre la position initiale et la position de fin d'accélération, et/ou entre la position de fin d'accélération et la position cible selon un sens de rotation dudit moteur.

Ainsi, dans un procédé selon l'invention, l'accélération (ou la décélération) du moteur d'essuie-glace n'est pas constante au sein d'une même phase d'accélération et/ou d'une phase de décélération. Ces changements de lois de commande lors d'une phase d'accélération et/ou d'une phase de décélération ne sont pas dus à des facteurs naturels externes incontrôlés (frottement de l'air sur l'essuie-glace par exemple), mais sont intentionnellement mis en oeuvre par l'unité électronique de commande du moteur d'essuie-glace. L'alimentation électrique théorique (hors facteurs naturels externes) du moteur est donc ajustée selon une pluralité de lois de commande distinctes sur une même phase d'accélération et/ou une même phase de décélération.

Il est en revanche évident que, quel que soit le procédé de contrôle choisi, lesdits facteurs naturels externes influent sur la vitesse réelle du bras d'essuie-glace.

En outre, rien n'empêche de prévoir une étape à vitesse constante à partir de la position de fin d'accélération jusqu'à une position angulaire, dite position de décélération, intermédiaire entre cette position de fin d'accélération et la position cible selon ce sens de rotation. Dans ce cas l'étape de décélération comprenant une ou plusieurs course(s) successive(s) chacune selon au moins une loi de commande, s'étale de la position de décélération à la position cible.

La position de décélération est la position à partir de laquelle l'arbre de sortie du moteur commence à décélérer en vue d'atteindre la position cible à laquelle il change de sens de rotation.

La position de décélération peut être choisie en différents endroits de la course complète de balayage en fonction des performances attendues en termes de temps de course d'un balai d'essuie-glace, de respect des limites mécaniques du moteur et/ou de la liaison cinématique, d'étendue de la zone de décélération, etc.

Par exemple, avantageusement et selon l'invention, l'alimentation électrique du moteur peut être ajustée par l'unité électronique de commande pour que, dans chaque sens de rotation, l'arbre de sortie du moteur :

- accélère entre la position initiale et la position de fin d'accélération,
- tourne à vitesse angulaire constante entre ladite position de fin d'accélération et ladite position de décélération,
- décélère entre la position de décélération et la position cible.

Conformément à l'invention, plusieurs étapes correspondant à des courses successives de l'arbre de sortie entre la position initiale et la position de fin d'accélération et/ou entre la position de décélération et la position cible peuvent être prévues. Parmi l'ensemble de ces courses successives durant une étape d'accélération et/ou une étape de décélération, au moins deux courses successives sont parcourues par l'arbre de sortie du moteur selon des lois de commande distinctes. Ainsi, par exemple, à l'étape de décélération, trois portions de course selon deux lois de commande distinctes alternées peuvent être prévues, ou encore trois portions de course selon trois lois de commande, etc.

La loi de commande appliquée à l'alimentation électrique du moteur peut par exemple être choisie en fonction de la position de l'arbre de sortie du moteur. Cependant, une loi de commande selon l'invention peut être choisie telle que l'alimentation du moteur est ajustée pour que la vitesse angulaire de l'arbre de sortie du moteur soit dépendante de n'importe quel autre facteur tel que par exemple : la position angulaire de l'arbre de sortie, la vitesse angulaire de l'arbre de sortie à l'instant précédent, l'accélération appliquée à l'arbre de sortie, le couple appliqué à l'arbre de sortie, une durée mesurée par un chronomètre, ou autre.

Conformément à l'invention tous types de lois de commande peuvent être envisagés, et ce quel que soit le nombre de lois de commande utilisées et quel que soit le nombre d'étapes de décélération entre la position de décélération et la position cible. Par exemple, des lois de commande selon l'invention peuvent être telles que la vitesse de l'arbre de sortie du moteur est commandée, en fonction de la position angulaire de l'arbre de sortie du moteur, selon des lois de commande telles que : polynomiale, exponentielle, hyperbolique, séries, ou autre.

En outre, l'ajustement de l'alimentation électrique du moteur peut être réalisé par une boucle ouverte, c'est-à-dire qu'une commande est envoyée au moteur sous la forme d'une valeur de consigne de son alimentation électrique sans boucle de retour (ou de contrôle) pour vérifier que la commande s'est ensuivie de l'effet attendu.

En variante, l'ajustement de l'alimentation électrique du moteur peut aussi et avantageusement être réalisé par l'intermédiaire d'une boucle de commande fermée, c'est-à-dire avec un capteur de position de vitesse de l'arbre de sortie du moteur ou d'un élément mécanique de la transmission mécanique de couple entre l'arbre de sortie du moteur et le balai d'essuie-glace permettant à l'unité électronique de commande de vérifier que la commande est bien ajustée pour obtenir la vitesse attendue et, le cas échéant, de la corriger.

De plus, avantageusement et selon l'invention, dans chaque sens de rotation de l'arbre de sortie du moteur, l'alimentation électrique du moteur est ajustée par l'unité électronique de commande selon une première loi de commande sur une première portion de course et selon une deuxième loi de commande distincte de la première loi de commande sur une deuxième portion de course, les première et deuxième portions de courses se succédant dans au moins une des étapes d'accélération et de décélération.

Ainsi, dans un procédé selon l'invention le moteur électrique suit au moins quatre étapes successives dans chaque sens de rotation, dont au moins deux d'accélération selon deux lois de commandes distinctes et au moins deux de décélération selon deux lois de commande distinctes.

Avantageusement un procédé selon l'invention comporte aussi une étape à vitesse constante entre la dernière étape d'accélération et la première étape de décélération.

Ainsi, selon un procédé conforme à l'invention, on peut commander un moteur d'essuie-glace par des lois de commandes simples, par exemple dans lesquelles la valeur de consigne en entrée du moteur est proportionnelle à une position de l'arbre de sortie du moteur.

En revanche, en se faisant succéder plusieurs étapes à lois de commande distinctes (par exemple de coefficients de proportion différents), on peut commander un tel moteur pour qu'il suive un mouvement complexe. Un tel mouvement complexe peut par exemple reproduire un mouvement obtenu par un système purement mécanique de l'état de la technique dans lequel le mouvement rotatif toujours dans le même sens d'un moteur est transformé en mouvements alternatifs de va-et-vient par un système à bielle-manivelle.

Cependant, dans un mode de réalisation particulièrement simple, avantageusement et selon l'invention, dans chaque sens de rotation de l'arbre de sortie du moteur, sur une course située entre ladite position de fin d'accélération et ladite position cible, l'alimentation électrique du moteur est ajustée par l'unité électronique de commande pour décélérer la rotation de l'arbre de sortie du moteur à partir d'une vitesse non-nulle en une position angulaire, dite position de décélération, située au moins entre la position de fin d'accélération et la position cible, à une vitesse nulle à la position cible selon au moins :

- une première loi de commande sur une première course entre ladite position de décélération et une position, dite position transitoire, angulaire intermédiaire entre la position de décélération et la position cible,
- une deuxième loi de commande, distincte de la première loi de commande, sur une deuxième course à partir de ladite position transitoire jusqu'à ladite position cible.

La position de décélération peut ou non être confondue avec la position de fin d'accélération. Elles ne sont pas confondues lorsqu'une étape à vitesse constante est prévue entre position de fin d'accélération et position de décélération.

Ainsi, par exemple, le moteur peut être commandé, pendant une course de balayage entre une première position extrémale et la seconde position extrémale, pour suivre au moins quatre étapes chronologiques entre des positions angulaires successives de l'arbre de sortie du moteur :

    a. une première étape d'accélération à partir d'une vitesse nulle à la position initiale jusqu'à une position de fin d'accélération,

    b. une deuxième étape à vitesse angulaire constante entre la position de fin d'accélération et une position de décélération,

    c. une troisième étape de décélération selon une première loi de commande de décélération entre la position de décélération et une position transitoire,

    d. une quatrième étape de décélération selon une deuxième loi de commande de décélération à partir de la position transitoire.

Puis le cycle a, b, c, d est répété dans l'autre sens de rotation de l'arbre de sortie du moteur correspondant à l'autre sens de balayage pour le balai d'essuie-glace.

Dans les étapes a à d, les lois de commande sont avantageusement telles que le profil de vitesse de l'arbre de sortie du moteur soit continu d'une position extrémale à une autre. De même, aux positions extrémales, la vitesse de l'arbre de sortie du moteur et de tout balai d'essuie-glace en lien cinématique avec cet arbre est nulle.

Selon l'invention, l'une au moins des étapes d'accélération et de décélération comprend la commande du moteur selon deux lois de commandes distinctes. Les deux étapes c et d de décélération de l'exemple précédent sont donc systématiques. C'est-à-dire qu'elles ont toujours lieu, à chaque course entre deux positions extrémales. La dernière étape de décélération, dans laquelle la seconde loi de commande est appliquée à l'alimentation électrique du moteur, est toujours mise en oeuvre, et ne correspond pas à une simple étape de correction de position. Elle constitue une étape à part entière, indispensable, du cycle de fonctionnement alternatif dans un sens puis dans un autre du système d'essuie-glace.

Conformément à l'invention, des étapes de décélération supplémentaires peuvent être prévues après l'étape d. Ainsi, une course de décélération correspondant à l'étape c commence à partir de la position de décélération. Puis des courses de décélération successives correspondant à des étapes successives d, e, f, ... se poursuivent jusqu'à ce que la position cible soit atteinte. Dans ces étapes successives de décélération, au moins deux lois de commande sont utilisées pour commander l'alimentation électrique du moteur.

Dans un mode de réalisation avantageusement simple, toutes les étapes de décélération (c, d, ...) sont commandées selon deux lois de commande uniquement.

Dans un mode de réalisation très simplifié, l'étape d est la dernière étape selon un sens de rotation et correspond à une course s'étendant de la position transitoire à la position cible.

Un exemple symétrique de mode de réalisation de l'invention en ce qui concerne l'étape d'accélération peut être envisagé conformément à l'invention.

En particulier, avantageusement et selon l'invention, dans chaque sens de rotation de l'arbre de sortie du moteur, sur une course située entre ladite position initiale et la position de fin d'accélération, l'alimentation électrique du moteur est ajustée par l'unité électronique de commande pour accélérer la rotation de l'arbre de sortie du moteur à partir d'une vitesse nulle à la position initiale à une vitesse non-nulle à la position de fin d'accélération selon au moins :

- une première loi de commande sur une première course entre la position initiale et une position, dite position transitoire, angulaire intermédiaire entre la position initiale et la position de fin d'accélération,
- une deuxième loi de commande, distincte de la première loi de commande, sur une deuxième course à partir de ladite position transitoire jusqu'à ladite position de fin d'accélération.

De plus, avantageusement et selon l'invention, l'une au moins des lois de commande en accélération et en décélération est une loi de commande en vitesse de l'arbre de sortie du moteur proportionnelle à la position angulaire instantanée de l'arbre de sortie du moteur.

La mise en oeuvre d'une telle loi de commande est simple. Elle peut donc être mise en oeuvre par des unités électroniques de commande particulièrement simples, économiques, fiables et donc sûres.

C'est pourquoi, dans un mode de réalisation particulièrement avantageux conforme à l'invention, chaque loi de commande appliquée au moteur est une loi de commande en vitesse de l'arbre de sortie du moteur proportionnelle à la position angulaire instantanée de l'arbre de sortie du moteur.

Par exemple dans un mode de réalisation particulier de l'invention dans lequel l'étape d'accélération comporte deux étapes successives à loi de commande distinctes, la première loi de commande est une loi selon laquelle la vitesse de l'arbre de sortie du moteur est proportionnelle à la position angulaire instantanée de l'arbre de sortie du moteur selon une constante a1.

En particulier, la constante a1 est avantageusement choisie pour que le profil de vitesse de l'arbre de sortie du moteur soit continu à la position de décélération.

De plus, toujours selon ce mode particulier de réalisation, la deuxième loi de commande est une loi dans laquelle la vitesse de l'arbre de sortie du moteur est proportionnelle à la différence entre la position cible et la position angulaire instantanée de l'arbre de sortie du moteur selon une constante a2.

En particulier, les constantes a1 et a2 sont avantageusement choisies pour que le profil de vitesse de l'arbre de sortie du moteur soit continu à la position transitoire.

Ainsi, sur la première course de décélération, la commande de vitesse angulaire v de l'arbre de sortie du moteur en fonction de sa position angulaire instantanée x s'exprime selon la relation (R1) :

$$v = p.a1.x \qquad (R1)$$

dans laquelle p est une constante pouvant être égale à un, dépendant notamment d'une commande reçue d'un pilote du système d'essuie-glace, par exemple un pilote (humain ou automatique) d'aéronef sur lequel un dispositif selon l'invention est installé.

De même, sur la seconde course de décélération la commande de vitesse angulaire v de l'arbre de sortie du moteur en fonction de sa position angulaire x s'exprime selon la relation (R2) :

$$v = p.a2.(c-x) \qquad (R2)$$

dans laquelle c est la coordonnée angulaire de la position cible.

Dans R1 et R2 le choix du signe de v dépend du sens de rotation du moteur.

Ainsi l'arbre de sortie est commandé jusqu'à sa position cible dans chaque sens de rotation en fonction d'une différence entre ladite position cible et sa position angulaire instantanée. L'erreur de positionnement de l'arbre de sortie par rapport à sa position cible à chaque fin de course dans un sens de rotation (et par conséquent du balai d'essuie-glace) est donc minimisée.

En effet, avantageusement, dans un mode de réalisation particulier d'un procédé conforme à l'invention, la vitesse de l'arbre de sortie du moteur dépend principalement de la position angulaire instantanée dudit arbre de sortie. Cependant, rien n'empêche que cette vitesse dépende aussi d'autres facteurs parmi lesquels par exemple un signal déclenché par un utilisateur humain, un signal automatique d'un système informatique, des signaux relatifs au moteur lui-même, etc.

Ainsi, un utilisateur peut par exemple ajuster la fréquence des allers-retours effectués par un balai d'essuie-glace ce qui aura pour influence de changer la vitesse de l'arbre de sortie du moteur dans au moins une des étapes d'un cycle de balayage entre deux positions extrémales. En particulier dans chacune des étapes, la vitesse peut être multipliée par un facteur p.

De même un système automatique peut envoyer des signaux à l'unité de commande pour ajuster la fréquence d'allers-retours en fonction par exemple, d'une quantité d'eau automatiquement détectée à la surface d'une glace.

De plus, avantageusement et selon l'invention, les lois de commande successives entre une position initiale et une position cible sont choisies de telle sorte que, entre ces deux positions extrémales :

- le profil de la vitesse de l'arbre de sortie du moteur soit continu,
- les variations d'accélération soient minimales.

Ainsi, avantageusement et selon l'invention, les lois de commande appliquées par l'unité électronique de commande à l'alimentation du moteur électrique sont choisies pour que le profil de vitesse de l'arbre de sortie du moteur soit continu entre deux positions extrémales selon un sens de rotation.

En outre, les inventeurs ont déterminé que les variations de l'accélération (soit la troisième dérivée de la position en fonction du temps ou « *jerk* » en anglais) correspondent à des chocs ou à des saccades qui provoquent une usure prématurée des systèmes mécaniques d'essuie-glace.

C'est pourquoi, avantageusement et selon l'invention, sur au moins l'une des étapes d'accélération et de décélération, l'alimentation électrique du moteur est ajustée par l'unité électronique de commande selon au moins deux lois de commande telles que le profil de vitesse du moteur sur cette étape présente au moins un point d'inflexion.

Un tel point d'inflexion est avantageusement du type concave-convexe lors d'une étape d'accélération et du type convexe-concave lors d'une étape d'accélération, c'est-à-dire, dans les deux cas, avec une accélération plus forte en valeur absolue dans la portion centrale de chacune des étapes d'accélération et de décélération. En particulier, l'avantage de tels points d'inflexion est de s'approcher de profil de vitesse tangents à la vitesse nulle aux positions initiale et cible, et tangents à la vitesse maximale atteinte aux positions de fin d'accélération et de décélération.

Les valeurs de la variation de l'accélération sont plus faibles lorsque le profil de vitesse présente un point d'inflexion entre la position initiale et la position de fin d'accélération et un point d'inflexion entre la position de décélération et la position cible. En particulier les variations de l'accélération sont d'autant plus faibles que le profil de vitesse est proche d'un profil de type sinusoïdal (où les positions extrémales correspondent aux valeurs 0 et Pi/2 de la fonction sinus).

En particulier, avantageusement et selon l'invention, les lois de commande appliquées par l'unité électronique de commande à l'alimentation du moteur électrique sont choisies pour que le profil de vitesse de l'arbre de sortie du moteur entre deux positions extrémales selon un sens de rotation soit similaire à une commande de type sinusoïdale.

Lorsque les lois de commande sont linéaires, et en tous cas à commande en vitesse proportionnelle à la position, les étapes d'accélération et de décélération présentent avantageusement chacune au moins trois étapes distinctes à au moins deux lois de commande différentes. Par exemple, au cours d'une étape de décélération le moteur peut être commandé selon une loi de vitesse proportionnelle à sa position angulaire selon une constante a1 entre la position de décélération et une première position transitoire, selon une constante a2 entre la première position transitoire et une seconde position transitoire, puis à nouveau selon la constante a1 entre la seconde position transitoire et la position cible, avec a2 supérieure à a1 en valeurs absolues.

Par ailleurs, avantageusement et selon l'invention, l'unité électronique de commande comprenant un circuit logique programmable, l'alimentation électrique du moteur est ajustée par ce circuit logique programmable.

En particulier une unité de commande selon l'invention peut comporter un circuit logique programmable de type FPGA, PLD (EPLD, CPLD,...), PLA, ou équivalent.

Un circuit logique programmable présente de nombreux avantages, parmi lesquels sa fiabilité, reconnue dans le milieu aéronautique, et permettant d'assurer une sûreté de fonctionnement élevée.

En outre, sa simplicité de fonctionnement est particulièrement adaptée à un procédé de contrôle selon l'invention dans lequel des étapes à accélérations constantes sont mises en oeuvre. Réciproquement un procédé selon l'invention est particulièrement adapté à l'utilisation de circuits logiques programmables dans des unités de commande selon l'invention.

La commande d'ajustement de l'alimentation électrique du moteur peut se faire de différentes manières, notamment en fonction de la nature du moteur électrique. Ainsi, par exemple, la vitesse de rotation de l'arbre de sortie peut être ajustée par la tension délivrée au moteur, par l'intensité, et/ou par un hachage de type PWM.

En particulier, avantageusement et selon l'invention, l'unité électronique de commande ajuste l'alimentation électrique du moteur par modulation de largeur d'impulsions électriques.

La modulation de largeur d'impulsions électriques (ou *Pulse Width Modulation* (PWM)) permet d'ajuster simplement la puissance délivrée à un moteur électrique d'essuie-glace grâce à une unité électronique de commande numérique.

À cette fin l'unité électronique de commande peut être équipée et/ou connectée à des éléments électroniques transformant une commande de l'unité électronique de commande en une alimentation électrique modulée de type PWM.

Avantageusement un procédé selon l'invention est aussi caractérisé en ce que le moteur électrique est un moteur électrique à courant continu sans balai.

L'utilisation d'un tel moteur est particulièrement adaptée dans un procédé de contrôle d'un moteur électrique d'essuie-glace dans lequel l'alternance des sens de déplacement d'un balai d'essuie-glace sur une glace est directement effectuée grâce à une inversion du sens de rotation de l'arbre de sortie du moteur électrique.

En outre, avantageusement et selon l'invention, l'unité électronique de commande reçoit des signaux d'au moins un capteur de position de l'arbre de sortie du moteur commandé et/ou d'un balai d'essuie-glace accouplé. Un tel capteur peut être disposé en un point de la course du balai d'essuie-glace (ou d'un élément mécanique accouplé) pour marquer la position de fin d'accélération et la position de décélération par exemple. De tels capteurs peuvent être choisis parmi tout type de capteur approprié, par exemple des capteurs à effet Hall.

La réception des signaux délivrés par de tels capteurs de position permettent d'améliorer la qualité du contrôle du moteur effectuée par l'unité électronique de commande, par exemple lors de l'approche de la position cible en fin d'étape de décélération dans un sens de balayage. De tels capteurs peuvent aussi permettre de réinitialiser régulièrement la mesure de la position de l'arbre de sortie du moteur lorsque celle-ci est mesurée à l'aide d'un capteur de position relatif, par exemple un encodeur optique.

En outre, des signaux venant du moteur peuvent avantageusement être pris en compte par l'unité électronique de commande pour la commande. Par exemple, un moteur électrique selon l'invention peut être équipé d'un capteur de température.

Un tel capteur permet de détecter un risque d'endommagement du moteur, voire un risque d'incendie à bord d'un véhicule. Une température trop élevée peut avoir différentes origines seules ou en combinaison : température extérieure défavorable, surchauffe due à un régime de fonctionnement trop élevé, couple appliqué à l'arbre de sortie du moteur trop élevé (par exemple si le bras d'essuie-glace est bloqué par un élément extérieur), ou autres.

Ainsi, la réception des signaux délivrés par des capteurs de température du moteur électrique par l'unité électronique de commande permet d'améliorer un procédé selon l'invention dans lequel on peut prévoir, par exemple de diminuer le régime moteur à partir d'une certaine température, ou d'arrêter complètement ledit moteur.

Dans un procédé conforme à l'invention, l'unité de commande reçoit donc des signaux d'entrée délivrés par des capteurs de mesure de la position angulaire de l'arbre de sortie du moteur, mais aussi tout autre type de signaux appropriés tels que des signaux issus d'un utilisateur humain, des signaux d'un système automatique de pilotage, des signaux de capteurs de température du moteur, etc. L'unité de commande adapte l'alimentation du moteur en fonction des signaux d'entrée qu'elle reçoit et de commandes enregistrées dans une mémoire correspondante aux différentes combinaisons de valeurs possibles reçues en entrées.

L'invention permet ainsi d'améliorer la durée de vie d'un dispositif mécanique d'essuie-glace tout en permettant une fréquence d'allers-retours de balayage plus élevée. L'invention permet notamment de réduire la fatigue d'une liaison cinématique disposée entre le moteur et le bras d'essuie-glace pour en assurer l'accouplement mécanique.

En procédant à des étapes d'accélération et/ou de décélération multiples, un tel procédé permet, par exemple :

- de faire varier la durée totale, notamment la portion angulaire de course, de l'accélération et/ou de la décélération,
- de minimiser les variations d'accélération - et donc les chocs - au cours d'un cycle complet de balayage,
- d'adapter la vitesse d'approche de la position cible, et de diminuer les chocs mécaniques lors de l'arrêt avant une inversion de sens de rotation.

L'invention permet en outre d'obtenir ces résultats grâce à un système entièrement électronique, et donc très peu encombrant, simple et léger.

Avantageusement et selon l'invention, l'unité électronique de commande mémorise donc dans une mémoire des données relatives aux différentes étapes et lois de commande à appliquer. En particulier, dans le cas de loi de commandes proportionnelles, l'unité électronique de commande mémorise les valeurs des coefficients. Ces valeurs peuvent être mémorisées dans une table, ce qui permet de minimiser les calculs nécessaires.

L'invention concerne également un procédé de contrôle d'un moteur électrique d'essuie-glace caractérisé en combinaison par tout ou partie des caractéristiques mentionnées ci-dessus ou ci-après.

L'invention s'étend également à un dispositif permettant de mettre en oeuvre un procédé conforme à l'invention. En particulier, l'invention s'étend à un dispositif de contrôle d'un moteur électrique d'essuie-glace comportant un arbre de sortie rotatif dans deux sens de rotation entre deux positions angulaires extrémales, ledit arbre de sortie étant accouplé à au moins un balai d'essuie-glace, ledit dispositif de contrôle comprenant :

- un dispositif de détection de la position angulaire de l'arbre de sortie du moteur,
- une unité électronique de commande :

    • comprenant des entrées de réception de signaux délivrés par le dispositif de détection,
    • adaptée pour pouvoir délivrer des signaux de commande de l'alimentation électrique du moteur tels que l'arbre de sortie du moteur suit, dans l'ordre chronologique, dans chaque sens de rotation de l'arbre de sortie du moteur, sur une course située entre une première position angulaire extrémale, dite position initiale, selon ce sens de rotation de l'arbre de sortie et la seconde position angulaire extrémale, dite position cible, à laquelle le moteur est commandé par l'unité électronique pour changer de sens de rotation :

        ▪ une étape d'accélération entre la position initiale et une position intermédiaire, dite position de fin d'accélération, située entre la position initiale et la position cible selon ce sens de rotation,

        ▪ une étape de décélération entre ladite position de fin d'accélération et la position cible,

caractérisé en ce que l'unité électronique de commande est adaptée pour pouvoir délivrer des signaux de commande de l'alimentation électrique du moteur selon au moins deux lois de commande distinctes sur au moins deux portions de courses successives de l'une au moins des étapes d'accélération et de décélération.

L'invention concerne également un dispositif de contrôle d'un moteur électrique d'essuie-glace caractérisé en combinaison par tout ou partie des caractéristiques mentionnées ci-dessus ou ci-après, notamment en relation avec le procédé de contrôle selon l'invention.

D'autres buts, caractéristiques et avantages de l'invention apparaîtront à la lecture de la description suivante donnée à titre non limitatif et qui se réfère aux figures annexées dans lesquelles :

- la figure 1 est un schéma synoptique structurel d'un mode de réalisation d'un dispositif de contrôle conforme à l'invention,
- la figure 2 est un schéma fonctionnel d'une unité de commande d'un dispositif selon l'invention, conforme à la figure 1,
- la figure 3 est un schéma représentatif de la commande en vitesse angulaire d'un arbre de sortie d'un moteur en fonction de sa position angulaire d'une position extrémale à une autre, ledit moteur étant contrôlé selon un premier procédé conforme à l'invention,
- la figure 4 est un schéma représentatif de la commande en vitesse angulaire d'un arbre de sortie d'un moteur en fonction de sa position angulaire d'une position extrémale à une autre, ledit moteur étant contrôlé selon un deuxième procédé conforme à l'invention.

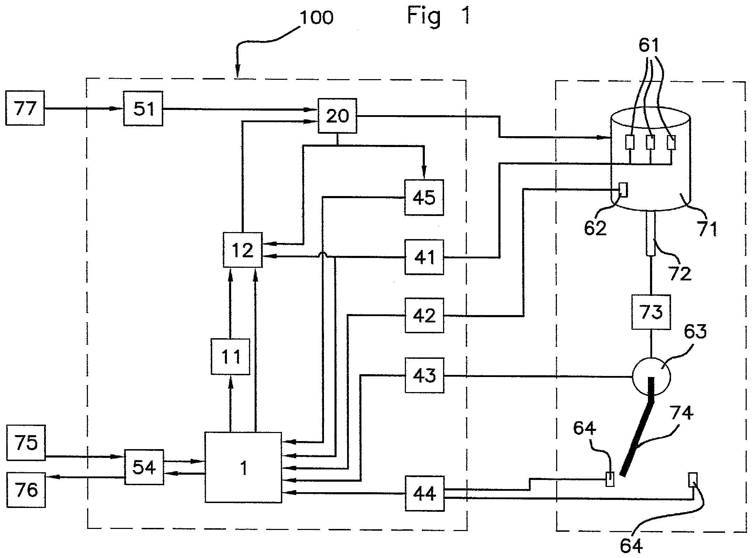

Dans les figures 1 à 4, un dispositif 100 de contrôle selon l'invention contrôle un moteur 71 électrique d'essuie-glace selon un procédé de contrôle conforme à l'invention. L'arbre 72 de sortie dudit moteur 71 d'essuie-glace est accouplé mécaniquement à un balai 74 d'essuie glace par l'intermédiaire d'un convertisseur 73, par exemple un convertisseur mécanique de type vis à bille et fourchette. Le moteur est donc en liaison cinématique avec le balai 74 d'essuie glace.

Le dispositif de contrôle d'essuie-glace présenté est particulièrement adapté aux véhicules aéronautiques, en particulier aux avions et aux hélicoptères.

Dans un mode de réalisation avantageux d'un dispositif selon l'invention, l'unité électronique de commande est un CPLD 1 (Circuit Logique Programmable Complexe ou en anglais : « Complex Programmable Logic Device »).

Le CPLD 1 reçoit, en entrée :

- des signaux délivrés par une interface 41 qui acquiert des signaux relatifs à la position de l'arbre 72 de sortie du moteur et délivrés par des capteurs 61 de position de l'arbre de sortie, par exemple des capteurs 61 à effet Hall,
- des signaux délivrés par une interface 42 qui acquiert la température du moteur et délivrés par un capteur 62 de température du moteur,
- des signaux délivrés par une interface 43 qui acquiert des signaux relatifs à la position et la vitesse du balai 74 d'essuie-glace et délivrés par un capteur 63 de position et de vitesse du balai d'essuie glace, par exemple un encodeur 63 optique,

- des signaux délivrés par une interface 44 qui acquiert des signaux relatifs à des positions prédéterminées du bras d'essuie glace et délivrés par des capteurs 64 de position du bras d'essuie-glace, par exemple deux capteurs 64 à effet Hall,

- des signaux issus de commandes 75 de pilotage d'un pilote humain ou d'un pilote automatique,

- des signaux représentatifs d'un dépassement de seuil de l'intensité électrique réellement fournie au moteur, et reçus d'un élément 45 de sécurité dédié à la détection d'une intensité trop élevée.

La détection d'une intensité trop élevée permet de détecter très rapidement un blocage du bras d'essuie-glace, et de prendre des mesures correctives (diminution de la vitesse, retour en arrière, arrêt du balai, ...) avant même que le moteur ne chauffe et qu'une température trop élevée ne soit détectée par le capteur 62 de température.

L'arbre 72 de sortie du moteur étant mécaniquement solidaire du rotor du moteur, chaque capteur 61 de position du rotor du moteur est avantageusement un capteur de position de l'arbre de sortie du moteur. En particulier un moteur selon l'invention est équipé de trois capteurs 61 de position de son rotor.

À partir d'un programme enregistré dans une mémoire non-volatile (par exemple de type FLASH), l'unité électronique 1 de commande traite ces différents signaux reçus sur ses entrées et émet des signaux électronique à destination :

- d'un convertisseur 11 numérique/analogique, lui-même relié à une unité 12 de contrôle de l'alimentation du moteur,

- de l'unité 12 de contrôle de l'alimentation du moteur,

- d'un dispositif 76 d'affichage en cockpit à l'usage du pilote du véhicule équipé du dispositif selon l'invention et du dispositif d'essuie-glace.

Dans certains modes de réalisation entièrement numériques, l'unité 12 de contrôle de l'alimentation du moteur est entièrement numérique, de sorte que la présence du convertisseur 11 numérique/analogique n'est pas nécessaire.

L'unité 12 de contrôle de l'alimentation du moteur est reliée à un convertisseur 20 de puissance. Ce convertisseur 20 de puissance transformant une commande reçue de l'unité 12 de contrôle en commande de puissance et délivre une puissance électrique d'alimentation au moteur 71.

L'intensité électrique fournie au moteur par le convertisseur 20 de puissance est mesurée et envoyée en donnée d'entrée de l'unité 12 de contrôle de l'alimentation du moteur et du CPLD 1 par l'intermédiaire de l'élément 45 de sécurité dédié à la détection d'une intensité trop élevée.

En outre, des filtres et des protections électriques sont utilisés aux interfaces d'un dispositif de contrôle selon l'invention avec des systèmes extérieurs, ainsi qu'aux interfaces du CPLD lui-même. Ainsi, des filtres et protections 51 sont disposés entre une alimentation 77 en électricité extérieure, issue de l'alimentation générale du véhicule, et le convertisseur 20 de puissance.

De même des filtres et protections 54 sont disposés entre d'une part le CPLD 1 et d'autre part les commandes 75 de pilotage et un dispositif 76 d'affichage en cockpit.

En outre, des fonctions de filtres 55, 56, 57, 58 sont réalisées dans le CPLD après les entrées du CPLD afin de filtrer les signaux des encodeurs 61 optiques, du capteur 62 de température du moteur, du capteur 63 de position du bras d'essuie-glace, des capteurs 64 à effet Hall, des commandes 75 de pilotage, et des signaux d'erreurs internes, respectivement transmis au CPLD 1 par l'intermédiaire des interfaces 41 à 46 et des filtres et protections 54.

L'ensemble de ces filtres permet essentiellement la protection des composants électroniques d'un dispositif de contrôle selon l'invention et en particulier du CPLD 1.

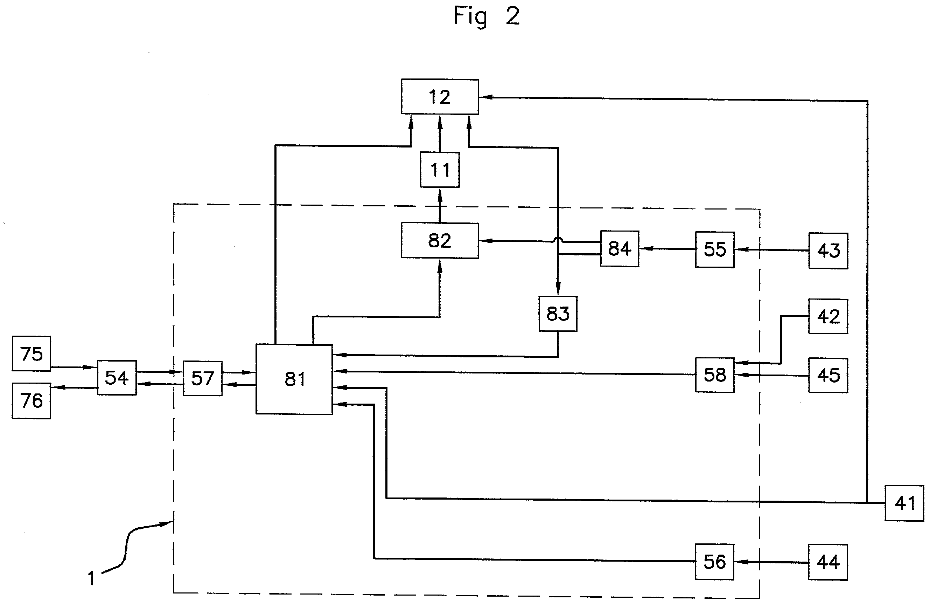

A la figure 2 sont représentées certaines fonctionnalités assurées par un CPLD 1 d'un dispositif selon l'invention pour mettre en oeuvre un procédé selon l'invention.

Ainsi, la position et la vitesse du bras d'essuie-glace sont reçues et traitées par un module 84 de mesure de la position et de la vitesse dudit bras d'essuie-glace. Cette mesure est fournie à un module 82 de commande de la vitesse du moteur qui délivre des signaux numériques représentatifs d'une valeur absolue de puissance à délivrer au moteur à destination du convertisseur 11 numérique/analogique.

La mesure de la vitesse de rotation du bras d'essuie-glace est aussi fournie à un module 83 de détection de la rotation du moteur. Ce module 83 de détection de la rotation du moteur fournit à son tour un signal correspondant à cette mesure à un module 81 de gestion du cycle de balayage.

La mesure de la vitesse de rotation du bras d'essuie-glaces est aussi fournie à l'unité 12 de contrôle de l'alimentation du moteur. Cela permet de créer une boucle de surveillance pour comparer la valeur de consigne envoyée sur l'alimentation du moteur à la valeur réelle de déplacement du bras d'essuie-glace en sortie.

Le module 81 de gestion du cycle de balayage est le module central du CPLD, c'est lui qui commande le moteur selon les différentes étapes d'un cycle de balayage conformément à un procédé selon l'invention.

En particulier le module 81 de gestion du cycle de balayage gère des étapes d'accélération en début de balayage selon un sens de rotation à partir d'une position initiale, et des étapes de décélération en approche d'une position cible.

Ce module gère aussi la position de « parking » de l'essuie-glace, c'est-à-dire une position dans laquelle l'essuie-glace est moins gênant pour la visibilité d'un pilote, en particulier cette position de parking peut être au-delà des positions extrémales atteintes lors des déplacements alternatifs d'essuyage. Le bras d'essuie-glace est notamment mis dans cette position de « parking » lorsqu'une commande d'arrêt complet des essuie-glaces est reçue d'une commande 75 de pilotage par le CPLD.

Le module 81 de gestion du cycle de balayage détermine la loi de commande du moteur d'essuie-glace à appliquer en fonction de signaux reçus :

- de l'interface 41 d'acquisition de la position de l'arbre 72 de sortie du moteur,
- de l'interface 44 d'acquisition des positions prédéterminées atteintes par le bras d'essuie glace,
- du module 83 de détection de la rotation du moteur,
- de commandes 75 de pilotage d'un pilote humain ou d'un pilote automatique.

En outre, le module 81 de gestion du cycle de balayage peut se mettre dans un mode « erreur », notamment s'il reçoit des signaux d'erreurs d'au moins une source, par exemple un signal d'erreur reçu de l'élément 45 de sécurité dédié à la détection d'une intensité trop élevée, d'une température trop élevée de composant électrique - notamment du moteur - ou électronique, etc.

En fonction de ces différents signaux, le module 81 de gestion lit dans une table enregistrée en mémoire des valeurs correspondant à une étape particulière du balayage.

Le module 81 de gestion délivre ces valeurs au module 82 de commande de la vitesse du moteur qui détermine la puissance d'alimentation à délivrer au moteur d'essuie-glace en fonction des commandes reçues de l'unité 81 de gestion, d'une loi de commande correspondant à cette étape, du signal de position du bras d'essuie-glace reçu de l'unité 84 de mesure de la position et de la vitesse dudit bras d'essuie-glace.

Le module 81 de gestion délivre aussi des valeurs de signe représentatives du signe de la vitesse à appliquer au moteur, directement à l'unité 12 de contrôle de l'alimentation du moteur. Ces valeurs de signe déterminent le sens de rotation du moteur, elles changent donc à chaque fois qu'une position extrémale est atteinte par le bras d'essuie-glace.

Le module 82 de commande de la vitesse du moteur délivre un signal numérique au convertisseur 11 numérique/analogique correspondant à une valeur de consigne de puissance électrique à appliquer au moteur. Ce convertisseur 11 numérique/analogique délivre ensuite un signal équivalent à la commande qu'il a reçue de l'unité 82 de commande de la vitesse du moteur, à destination de l'unité 12 de contrôle de l'alimentation du moteur.

L'ensemble de ces composants et de ces modules fonctionnels d'un dispositif de contrôle selon l'invention permet de contrôler le moteur électrique d'un dispositif mécanique d'essuie-glace selon des phases alternatives dans un sens de rotation puis dans un autre entre deux positions extrémales.

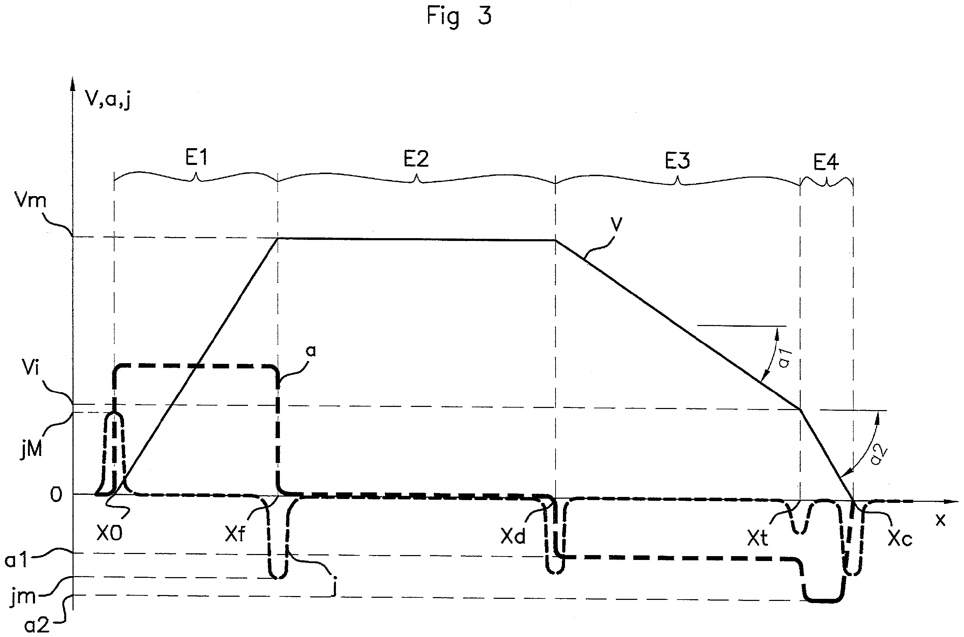

Ainsi à la figure 3, un premier mode de réalisation d'un procédé selon l'invention est représenté dans lequel sont représentées, en fonction de la position x angulaire dudit arbre de sortie du moteur :

- la vitesse V angulaire de l'arbre de sortie du moteur,
- l'accélération a angulaire de l'arbre de sortie du moteur,
- les variations d'accélération j (*pour jerk*) de l'arbre de sortie du moteur.

Conformément à cette figure, l'alimentation du moteur est ajustée de telle manière que l'arbre de sortie du moteur suit chronologiquement quatre étapes (ou courses) distinctes entre une première position extrémale, dite position X0 initiale, et une seconde position extrémale, dite position Xc cible, dans un sens de rotation.

Dans une première étape E1 d'accélération, entre la position X0 initiale et une position Xf de fin d'accélération, l'arbre de sortie du moteur est accéléré selon une accélération constante a1 à partir d'une vitesse nulle (V=0) à la position X0 initiale jusqu'à atteindre une vitesse Vm non-nulle à la position Xf de fin d'accélération.

Dans une deuxième étape E2, l'alimentation du moteur est ajustée de telle sorte que son arbre de sortie tourne à vitesse angulaire constante entre la position Xf de fin d'accélération et une position Xd de décélération. L'accélération a est nulle durant cette étape.

Dans une troisième étape E3, entre la position Xd de décélération et une position Xt transitoire, l'arbre de sortie du moteur est décéléré à partir de la vitesse Vm à la position Xd de décélération jusqu'à une vitesse Vi intermédiaire à la position Xt transitoire.

Dans cette étape E3, l'accélération a angulaire est constante selon l'opposé de la constante a1 (-a1), de sorte que la vitesse angulaire est proportionnelle à l'opposé de la position instantanée de l'arbre de sortie du moteur entre la position Xd de décélération et la position transitoire Xt. La vitesse V angulaire est exprimée en fonction de la position x angulaire de l'arbre de sortie selon la relation :

$$V = Vm - p.a1.(x\text{-}Xd)$$

dans laquelle :

- $Xd \leq x \leq Xt$,
- p est une constante représentative d'une commande reçue d'un pilote du système d'essuie-glace, par exemple un pilote (humain ou automatique) d'aéronef sur lequel un dispositif selon l'invention est installé.

Dans une quatrième et dernière étape E4, entre la position Xt transitoire et la position Xc cible, l'arbre de sortie du moteur est décéléré à partir de la vitesse Vi à la position Xt transitoire jusqu'à une vitesse nulle à la position Xc cible. Dans cette étape, l'accélération a angulaire est constante selon la constante a2, de sorte que la vitesse angulaire est proportionnelle à la différence entre la position Xc cible et la position instantanée de l'arbre de sortie du moteur. En fait, la vitesse V angulaire est exprimée en fonction de la position x angulaire de l'arbre de sortie selon la relation :

$$V = A + p.a2.(Xc-x)$$

dans laquelle :

-	$Xt \le x \le Xc$, avec x nul en Xt,
-	p est une constante représentative d'une commande reçue d'un pilote du système d'essuie-glace, par exemple un pilote (humain ou automatique) d'aéronef sur lequel un dispositif selon l'invention est installé,
-	A est une constante choisie pour que le profil de vitesse soit continu en la position transitoire Xt.

On peut avantageusement choisir a2 comme multiple de a1 par un entier naturel.

La loi de commande du moteur 71 électrique d'essuie-glace change, entre la position X0 initiale et la position Xc cible, aux positions Xf de fin d'accélération, Xd de décélération et Xt transitoire. La loi change aussi à chaque position extrémale. En effet, la position cible est un point de rebroussement pour le bras d'essuie-glace correspondant à un changement de sens de rotation de l'arbre de sortie du moteur.

Dans sa course de retour de la position cible Xc à la position initiale X0 (qui deviennent respectivement une position initiale et une position cible selon l'autre sens de rotation), l'alimentation du moteur est ajustée de telle sorte qu'elle suit un profil de vitesse identique, la vitesse étant de signe opposé car l'arbre de rotation tourne dans l'autre sens de rotation. Ainsi, dans chaque sens de rotation, l'alimentation électrique d'un moteur d'essuie-glace selon ce procédé de contrôle conforme à l'invention suit, dans l'ordre, les étapes E1 E2, E3 et E4.

C'est pourquoi la courbe j de la variation de l'accélération montre des pics induisant des chocs mécaniques aux positions X0 et Xc. De même, à chaque changement de valeur de l'accélération, aux positions Xf, Xd et Xt, la courbe j présente des pics. Les valeurs minimale jm et maximale jM de j sont d'autant plus fortes que les ruptures de pentes de vitesse sont importantes. D'où l'intérêt de prévoir un procédé de commande selon l'invention présentant plusieurs pentes successives dans les étapes d'accélération et décélération mais présentant des ruptures moins fortes, notamment s'approchant de courbes de type sinusoïdal.

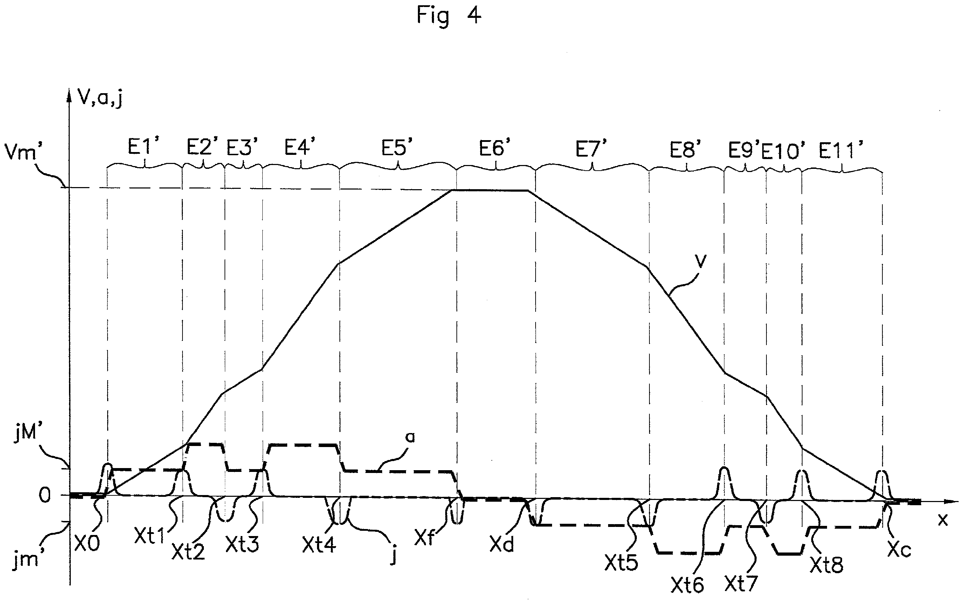

À la figure 4, un deuxième mode de réalisation d'un procédé selon l'invention est représenté dans lequel sont représentées, en fonction de la position x angulaire dudit arbre de sortie du moteur :

-	la vitesse V angulaire de l'arbre de sortie du moteur,
-	l'accélération a angulaire de l'arbre de sortie du moteur,
-	les variations d'accélération j de l'arbre de sortie du moteur.

Conformément à cette figure, l'alimentation du moteur est ajustée de telle manière que l'arbre de sortie du moteur suit chronologiquement onze étapes (ou courses) distinctes entre une première position extrémale, dite position X0 initiale, et une seconde position extrémale, dite position Xc cible, dans un sens de rotation. Dans les onze étapes E1' à E11' les accélérations sont choisies constantes, et de façon à approximer au plus près une courbe de type sinusoïdal. Les équations de vitesse sur chacune des étapes sont en outre choisies pour que le profil de vitesse soit continu de X0 à Xc.

Dans une première série d'étapes E1' à E5' d'accélération, entre la position X0 initiale et une position Xf de fin d'accélération, l'arbre de sortie du moteur est accéléré selon une série d'accélérations constantes positives à partir d'une vitesse nulle (V=0) à la position X0 initiale jusqu'à atteindre une vitesse Vm' non-nulle à la position Xf de fin d'accélération. Un changement de loi de commande intervient à chaque position transitoire Xt1, Xt2, Xt3 et Xt4 délimitant les cinq étapes E1', E2', E3', E4' et E5' d'accélération.

Les constantes d'accélération positives sont choisies de telles sortes que d'une part, la courbe de la vitesse présente au moins un point d'inflexion entre X0 et Xf, et d'autre part pour que les variations de l'accélération entre deux étapes successives soient faibles. Ainsi les valeurs minimale jm' et maximale jM' de j sont bien inférieures dans ce deuxième mode de réalisation présenté à la figure 4, aux valeurs maximales de j du premier mode de réalisation présenté à la figure 3. De même la constante d'accélération de la dernière étape d'accélération E5' est choisie pour que le choc (ou variation d'accélération) à la transition entre l'étape E5' et l'étape E6' soit minimal.

En particulier, les étapes E1', E2' et E3' forment un premier point d'inflexion du type convexe-concave, et les étapes E3', E4' et E5' un second point d'inflexion dans l'étape d'accélération. Les lois de commande utilisées pendant les étapes E1' et E5' sont donc telles qu'elles sont proches d'une loi tangentielle respectivement à la vitesse nulle à la position X0 initiale, et à la vitesse Vm' maximale à la position Xf de fin d'accélération.

Dans une sixième étape E6', l'alimentation du moteur est ajustée de telle sorte que son arbre de sortie tourne à vitesse angulaire constante entre la position Xf de fin d'accélération et une position Xd de décélération. L'accélération a est nulle durant cette étape.

Cependant les étapes d'accélération et de décélération (X0 à Xf et Xd à Xc) étant plus étendues sur l'amplitude de balayage angulaire, le temps de parcours entre deux positions extrémales (X0 et Xc) pourrait être plus important selon ce deuxième mode de réalisation que selon le premier mode de réalisation si Vm' était égale à Vm.

Mais les chocs entre chaque étape étant largement réduits, la vitesse constante Vm' peut être supérieure à Vm sans risquer d'endommager les transmissions mécaniques du système de balayage. Par conséquent en diminuant les chocs aux transitions entre étapes, la vitesse Vm' peut être élevée, et la durée d'un cycle de balayage raccourcie.

Dans une troisième série d'étapes E7' à E11', entre la position Xd de décélération et la position Xc cible, l'arbre de sortie du moteur est décélérée à partir de la vitesse Vm' à la position Xd de décélération jusqu'à une vitesse nulle à la position Xc cible. Un changement de loi de commande intervient à chaque position transitoire Xt5, Xt6, Xt7 et Xt8 délimitant les cinq étapes E7', E8', E9', E10' et E11' d'accélération.

En particulier, les étapes E7', E8' et E9' forment un premier point d'inflexion du type concave-convexe, et les étapes E9', E10' et E11' un second point d'inflexion dans l'étape de décélération. Les lois de commande utilisées pendant les étapes E7' et E11' sont donc telles qu'elles sont proches d'une loi tangentielle respectivement à la vitesse Vm' maximale à la position Xd de décélération, et à la vitesse nulle à la position Xc cible.

L'invention peut faire l'objet de nombreuses autres variantes de réalisations non représentées. En particulier, il est possible de commander un unique moteur d'essuie-glace, accouplé mécaniquement à plusieurs balais d'essuie-glace, ou au contraire choisir de dédier un dispositif de commande et un moteur pour chaque bras d'essuie-glace afin d'éviter des transmissions mécaniques complexes et encombrantes entre deux bras d'essuie-glace.

En revanche, dans le cas ou plusieurs moteurs d'essuie-glace sont présents sur un véhicule, une unité de commande selon l'invention peut contrôler plusieurs moteurs simultanément.

En outre, dans un procédé selon l'invention un nombre quelconque d'étapes d'accélération et/ou de décélération selon un sens de rotation peut être prévu. Rien n'empêche en particulier de prévoir un nombre d'étapes d'accélération très différent du nombre d'étapes de décélération.

En outre, à chaque étape, le profil de commande en vitesse n'est pas nécessairement proportionnel à la position du bras d'essuie-glace (ou d'un mécanisme de transmission associé, notamment de réduction entre moteur et bras d'essuie-glace). En effet un tel profil peut être polynomial, exponentiel, en loi de séries, hyperbolique, sinusoïdal, etc.

De plus, la courbe approximée par des étapes à vitesse proportionnelle à la position successive n'est pas nécessairement sinusoïdale et peut être une combinaison de fonctions exponentielles par exemple.

Un procédé de commande selon l'invention peut notamment être adapté au système d'accouplement mécanique entre le moteur et le bras d'essuie-glace.

En outre grâce à un système d'essuie-glace à commande électronique selon l'invention, les positions extrémales X0 et Xc peuvent changer en fonction de certains critères, tels que la vitesse de déplacement horizontal d'un véhicule par exemple. Cela permet de modifier simplement l'amplitude d'essuyage d'un pare-brise pendant le vol.

## Revendications

1. Procédé de contrôle d'un moteur (71) électrique d'essuie-glace, ledit moteur (71) comportant un arbre (72) de sortie rotatif dans deux sens de rotation entre deux positions angulaires extrémales, l'arbre (72) de sortie étant accouplé à au moins un balai (74) d'essuie-glace, dans lequel l'alimentation électrique du moteur est ajustée par une unité (1) électronique de commande en fonction de la position angulaire de l'arbre (74) de sortie du moteur pour suivre, dans l'ordre chronologique, dans chaque sens de rotation de l'arbre (72) de sortie du moteur, sur une course située entre une première position angulaire extrémale, dite position initiale, selon ce sens de rotation de l'arbre (72) de sortie et la seconde position angulaire extrémale, dite position cible, à laquelle l'arbre de sortie change de sens de rotation :

   • une étape d'accélération entre la position initiale et une position intermédiaire, dite position de fin d'accélération, située entre la position initiale et la position cible selon ce sens de rotation,
   • une étape de décélération entre ladite position de fin d'accélération et la position cible,

   **caractérisé en ce que**, sur au moins l'une des étapes d'accélération et de décélération, l'alimentation électrique du moteur est ajustée par l'unité (1) électronique de commande selon au moins deux lois de commande en vitesse distinctes sur au moins deux portions de courses successives.

2. Procédé selon la revendication 1, **caractérisé en ce que** dans chaque sens de rotation de l'arbre (72) de sortie du moteur, l'alimentation électrique du moteur est ajustée par l'unité (1) électronique de commande selon une première loi de commande sur une première portion de course et selon une deuxième loi de commande distincte de la première loi de commande sur une deuxième portion de course, les première et deuxième portions de courses se succédant dans au moins une des étapes d'accélération et de décélération.

**3.** Procédé selon l'une des revendications 1 ou 2, **caractérisé en ce que** dans chaque sens de rotation de l'arbre (72) de sortie du moteur, sur une course située entre ladite position de fin d'accélération et ladite position cible, l'alimentation électrique du moteur est ajustée par l'unité (1) électronique de commande pour décélérer la rotation de l'arbre de sortie du moteur à partir d'une vitesse non-nulle en une position angulaire, dite position de décélération, située au moins entre la position de fin d'accélération et la position cible, à une vitesse nulle à la position cible selon au moins :

    - une première loi de commande sur une première course entre ladite position de décélération et une position, dite position transitoire, angulaire intermédiaire entre la position de décélération et la position cible,
    - une deuxième loi de commande, distincte de la première loi de commande, sur une deuxième course à partir de ladite position transitoire jusqu'à ladite position cible.

**4.** Procédé selon l'une des revendications 1 à 3, **caractérisé en ce que** dans chaque sens de rotation de l'arbre (72) de sortie du moteur, sur une course située entre ladite position initiale et la position de fin d'accélération, l'alimentation électrique du moteur est ajustée par l'unité (1) électronique de commande pour accélérer la rotation de l'arbre de sortie du moteur à partir d'une vitesse nulle à la position initiale à une vitesse non-nulle à la position de fin d'accélération selon au moins :

    - une première loi de commande sur une première course entre la position initiale et une position, dite position transitoire, angulaire intermédiaire entre la position initiale et la position de fin d'accélération,
    - une deuxième loi de commande, distincte de la première loi de commande, sur une deuxième course à partir de ladite position transitoire jusqu'à ladite position de fin d'accélération.

**5.** Procédé selon l'une des revendications 1 à 4, **caractérisé en ce que** l'une au moins des lois de commande en accélération et en décélération est une loi de commande en vitesse de l'arbre (72) de sortie du moteur proportionnelle à la position angulaire instantanée de l'arbre de sortie du moteur.

**6.** Procédé selon l'une des revendications 1 à 5, **caractérisé en ce que** les lois de commande successives entre une position initiale et une position cible sont choisies de telle sorte que, entre ces deux positions extrémales :

    - le profil de la vitesse de l'arbre (72) de sortie du moteur soit continu,
    - les variations d'accélération soient minimales.

**7.** Procédé selon l'une des revendications 1 à 6, **caractérisé en ce que** sur au moins l'une des étapes d'accélération et de décélération, l'alimentation électrique du moteur (71) est ajustée par l'unité (1) électronique de commande selon au moins deux lois de commande telles que le profil de vitesse du moteur sur cette étape présente au moins un point d'inflexion.

**8.** Procédé selon l'une des revendications 1 à 7, **caractérisé en ce que**, l'unité (1) électronique de commande comprenant un circuit (1) logique programmable, l'alimentation électrique du moteur (71) est ajustée par ce circuit logique programmable.

**9.** Procédé selon l'une des revendications 1 à 8, **caractérisé en ce que** l'unité (1) électronique de commande ajuste l'alimentation électrique du moteur (71) par modulation de largeur d'impulsions électriques.

**10.** Dispositif de contrôle d'un moteur (71) électrique d'essuie-glace comportant un arbre (72) de sortie rotatif dans deux sens de rotation entre deux positions angulaires extrémales, ledit arbre (72) de sortie étant accouplé à au moins un balai (74) d'essuie-glace, ledit dispositif de contrôle comprenant :

    - un dispositif de détection (61) de la position angulaire de l'arbre de sortie du moteur,
    - une unité (1) électronique de commande :

        • comprenant des entrées de réception de signaux délivrés par le dispositif de détection,
        • adaptée pour pouvoir délivrer des signaux de commande de l'alimentation électrique du moteur tels que l'arbre de sortie du moteur (71) suit, dans l'ordre chronologique, dans chaque sens de rotation de l'arbre (72) de sortie du moteur, sur une course située entre une première position angulaire extrémale, dite position initiale, selon ce sens de rotation de l'arbre (72) de sortie et la seconde position angulaire extrémale, dite position cible, à laquelle le moteur est commandé par l'unité électronique pour changer de sens de rotation :

            ■ une étape d'accélération entre la position initiale et une position intermédiaire, dite position de fin d'accélération, située entre la position initiale et la position cible selon ce sens de rotation,

▪ une étape de décélération entre ladite position de fin d'accélération et la position cible,

**caractérisé en ce que** l'unité (1) électronique de commande est adaptée pour délivrer des signaux de commande de l'alimentation électrique du moteur selon au moins deux lois de commande en vitesse distinctes sur au moins deux portions de courses successives de l'une au moins des étapes d'accélération et de décélération.

**Patentansprüche**

1. Verfahren zur Kontrolle eines elektrischen Scheibenwischermotors (71), wobei der besagte Motor (71) eine in zwei Drehrichtungen zwischen zwei äußersten Winkelpositionen drehende Ausgangswelle (72) umfasst, wobei die Ausgangswelle (72) mit zumindest einem Scheibenwischerblatt (74) verbunden ist, wobei die Stromversorgung des Motors in Abhängigkeit von der Winkelposition der Ausgangswelle (74) des Motors durch eine elektronische Steuereinheit (1) angepasst wird, um in chronologischer Reihenfolge in jeder Drehrichtung der Ausgangswelle (72) des Motors auf einem Weg, der sich zwischen einer ersten, Ausgangsposition genannten, äußersten Winkelposition in diese Drehrichtung der Ausgangswelle (72) und der zweiten, Zielposition genannten äußersten Winkelposition befindet, in der die Ausgangswelle die Drehrichtung ändert, zu folgen:

• einem Beschleunigungsschritt zwischen der Ausgangsposition und einer Beschleunigungsendposition genannten Zwischenposition, die sich in dieser Drehrichtung zwischen der Ausgangsposition und der Zielposition befindet,
• einem Verzögerungsschritt zwischen der besagten Beschleunigungsendposition und der Zielposition,

**dadurch gekennzeichnet, dass** bei zumindest einem der Schritte der Beschleunigung und der Verzögerung, die Stromversorgung des Motors durch die elektronische Steuereinheit (1) gemäß zumindest zwei unterschiedlichen Geschwindigkeitssteuergesetzen in zumindest zwei aufeinanderfolgenden Wegabschnitten angepasst wird.

2. Verfahren nach Anspruch 1, **dadurch gekennzeichnet, dass** die Stromversorgung des Motors in jeder Drehrichtung der Ausgangswelle (72) des Motors durch die elektronische Steuereinheit (1) gemäß einem ersten Steuergesetz auf einem ersten Wegabschnitt und gemäß einem vom ersten Steuergesetz unterschiedlichen zweiten Steuergesetz auf einem zweiten Wegabschnitt angepasst wird, wobei die ersten und zweiten Wegabschnitte in zumindest einem der Schritte der Beschleunigung und der Verzögerung aufeinanderfolgen.

3. Verfahren nach einem der Ansprüche 1 oder 2, **dadurch gekennzeichnet, dass** die Stromversorgung des Motors in jeder Drehrichtung der Ausgangswelle (72) des Motors, auf einem Weg, der sich zwischen der besagten Beschleunigungsendposition und der besagten Zielposition befindet, durch die elektronische Steuereinheit (1) angepasst wird, um die Drehung der Ausgangswelle des Motors ausgehend von einer Geschwindigkeit ungleich Null in einer Verzögerungsposition genannten Winkelposition, die sich zumindest zwischen der Beschleunigungsendposition und der Zielposition befindet, auf eine Null-Geschwindigkeit in der Zielposition zu verzögern, gemäß zumindest:

- einem ersten Steuergesetz auf einem ersten Weg zwischen der besagten Verzögerungsposition und einer Übergangsposition genannten Zwischenwinkelposition zwischen der Verzögerungsposition und der Zielposition,
- einem zweiten Steuergesetz, das sich vom ersten Steuergesetz unterscheidet, auf einem zweiten Weg ausgehend von der besagten Übergangsposition bis zur besagten Zielposition.

4. Verfahren nach einem der Ansprüche 1 bis 3, **dadurch gekennzeichnet, dass** die Stromversorgung des Motors in jeder Drehrichtung der Ausgangswelle (72) des Motors auf einem Weg, der sich zwischen der besagten Ausgangsposition und der Beschleunigungsendposition befindet, durch die elektronische Steuereinheit (1) angepasst wird, um die Drehung der Ausgangswelle des Motors ausgehend von einer Null-Geschwindigkeit in der Ausgangsposition auf eine Geschwindigkeit ungleich Null in der Beschleunigungsendposition zu beschleunigen, gemäß zumindest:

- einem ersten Steuergesetz auf einem ersten Weg zwischen der Ausgangsposition und einer Übergangsposition genannten Zwischenwinkelposition zwischen der Ausgangsposition und der Beschleunigungsendposition,
- einem zweiten Steuergesetz, das sich vom ersten Steuergesetz unterscheidet, auf einem zweiten Weg ausgehend ab der besagten Übergangsposition bis zur besagten Beschleunigungsendposition.

**5.** Verfahren nach einem der Ansprüche 1 bis 4, **dadurch gekennzeichnet, dass** zumindest das eine der Steuergesetze für die Beschleunigung und Verzögerung ein Steuergesetz für die Geschwindigkeit der Ausgangswelle (72) des Motors proportional zur momentanen Winkelposition der Ausgangswelle des Motors ist.

**6.** Verfahren nach einem der Ansprüche 1 bis 5, **dadurch gekennzeichnet, dass** die aufeinanderfolgenden Steuergesetze zwischen einer Ausgangsposition und einer Zielposition derart ausgewählt werden, dass zwischen diesen beiden äußersten Positionen:

- das Profil der Geschwindigkeit der Ausgangswelle (72) des Motors kontinuierlich ist,
- die Beschleunigungsvariationen minimal sind.

**7.** Verfahren nach einem der Ansprüche 1 bis 6, **dadurch gekennzeichnet, dass** die Stromversorgung des Motors (71) in zumindest dem einem der Schritte der Beschleunigung und der Verzögerung durch die elektronische Steuereinheit (1) gemäß zumindest zwei Steuergesetzen angepasst wird, sodass das Geschwindigkeitsprofil des Motors in diesem Schritt zumindest einen Wendepunkt aufweist.

**8.** Verfahren nach einem der Ansprüche 1 bis 7, **dadurch gekennzeichnet, dass**, da die elektronische Steuereinheit (1) einen programmierbaren logischen Schaltkreis (1) umfasst, die Stromversorgung des Motors (71) durch diesen programmierbaren logischen Schaltkreis angepasst wird.

**9.** Verfahren nach einem der Ansprüche 1 bis 8, **dadurch gekennzeichnet, dass** die elektronische Steuereinheit (1) die Stromversorgung des Motors (71) durch elektrische Pulsweitenmodulation anpasst.

**10.** Vorrichtung zur Kontrolle eines elektrischen Scheibenwischermotors (71), eine in zwei Drehrichtungen zwischen zwei äußersten Winkelpositionen drehende Ausgangswelle (72) umfassend, wobei die besagte Ausgangswelle (72) mit zumindest einem Scheibenwischerblatt (74) verbunden ist, wobei die Vorrichtung zur Kontrolle umfasst:

- eine Vorrichtung zur Detektion (61) der Winkelposition der Ausgangswelle des Motors,
- eine elektronische Steuereinheit (1):

• Eingänge für den Empfang von Signalen umfassend, die durch die Vorrichtung zur Detektion ausgegeben werden,
• ausgeführt, um solche Steuersignale für die Stromversorgung des Motors liefern zu können, dass die Ausgangswelle des Motors (71) in chronologischer Reihenfolge in jeder Drehrichtung der Ausgangswelle (72) des Motors auf einem Weg, der sich zwischen einer ersten, Ausgangsposition genannten, äußersten Winkelposition in diese Drehrichtung der Ausgangswelle (72) und der zweiten, Zielposition genannten äußersten Winkelposition befindet, in der der Motor von der elektronischen Einheit gesteuert wird, um die Drehrichtung zu ändern, folgt:

■ einem Beschleunigungsschritt zwischen der Ausgangsposition und einer Beschleunigungsendposition genannten Zwischenposition, die sich in dieser Drehrichtung zwischen der Ausgangsposition und der Zielposition befindet,
■ einem Verzögerungsschritt zwischen der besagten Beschleunigungsendposition und der Zielposition,

**dadurch gekennzeichnet, dass** die elektronische Steuereinheit (1) ausgeführt ist, um Steuersignale für die Stromversorgung des Motors gemäß zumindest zwei unterschiedlichen Geschwindigkeitssteuergesetzen in zumindest zwei aufeinanderfolgenden Wegabschnitten von dem zumindest einen der Schritte der Beschleunigung und der Verzögerung zu liefern.

**Claims**

**1.** Method for controlling the electric motor (71) of a windscreen wiper, said motor (71) comprising an output shaft (72) which can rotate in two directions of rotation between two final angular positions, with the output shaft (72) being coupled to at least one wiper blade (74), wherein the electrical power supply of the motor is adjusted by an electronic control unit (1) according to the angular position of the output shaft (74) of the motor in order to follow, in chronological order, in each direction of rotation of the output shaft (72) of the motor, along a course of travel located between a first final angular position, referred to as the starting position, according to this direction of rotation of the output shaft (72) and the second final angular position, referred to as the target position, in which the output shaft changes the direction of rotation:

• an acceleration stage between the starting position and an intermediate position, referred to as the end of acceleration position, located between the starting position and the target position according to this direction of rotation,

• a deceleration stage between said end of acceleration position and the target position,

**characterised in that**, over at least one of the acceleration and deceleration stages, the electrical power supply of the motor is adjusted by the electronic control unit (1) according to at least two separate speed control laws along at least two successive sections of travel.

2. Method according to claim 1, **characterised in that** in each direction of rotation of the output shaft (72) of the motor, the electrical power supply of the motor is adjusted by the electronic control unit (1) according to a first control law along a first section of travel and according to a second control law separate from the first control law along a second section of travel, with the first and second sections of travel succeeding one another in at least one of the acceleration and deceleration stages.

3. Method according to one of claims 1 or 2, **characterised in that** in each direction of rotation of the output shaft (72) of the motor, along a course of travel located between said end of acceleration position and said target position, the electrical power supply of the motor is adjusted by the electronic control unit (1) in order to decelerate the rotation of the output shaft of the motor from a non-zero speed in an angular position, referred to as the deceleration position, located at least between the end of acceleration position and the target position, to a zero speed at the target position according to at least:

   - a first control law along a first course of travel between said deceleration position and an intermediate angular position, referred to as transient position, the deceleration position and the target position,
   - a second control law, separate from the first control law, along a second course of travel from said transient position to said target position.

4. Method according to one of claims 1 to 3, **characterised in that** in each direction of rotation of the output shaft (72) of the motor, along a course of travel located between said starting position and the end of acceleration position, the electrical power supply of the motor is adjusted by the electronic control unit (1) in order to accelerate the rotation of the output shaft of the motor from a zero speed at the starting position to a non-zero speed at the end of acceleration position according to at least:

   - a first control law along a first course between the starting position and an intermediate angular position, referred to as transient position, between the starting position and the end of acceleration position,
   - a second control law, separate from the first control law, along a second course of travel from said transient position to said end of acceleration position.

5. Method according to one of claims 1 to 4, **characterised in that** at least one of the control laws in acceleration and in deceleration is a speed control law of the output shaft (72) of the motor proportional to the instantaneous angular position of the output shaft of the motor.

6. Method according to one of claims 1 to 5, **characterised in that** the successive control laws between a starting position and a target position are chosen such that, between these two final positions:

   - the profile of the speed of the output shaft (72) of the motor is continuous,
   - the variations in acceleration are minimal.

7. Method according to one of claims 1 to 6, **characterised in that** over at least one of the acceleration and deceleration stages, the electrical power supply of the motor (71) is adjusted by the electronic control unit (1) according to at least two control laws such as the speed profile of the motor over this stage has at least one inflection point.

8. Method according to one of claims 1 to 7, **characterised in that**, the electronic control unit (1) comprising a programmable logic circuit (1), the electrical power supply of the motor (71) is adjusted by this programmable logic circuit.

9. Method according to one of claims 1 to 8, **characterised in that** the electronic control unit (1) adjusts the electrical power supply of the motor (71) via modulation of the width of the electrical pulses.

10. Device for controlling the electric motor (71) of a windscreen wiper comprising an output shaft (72) that can rotate in two directions of rotation between two final angular positions, said output shaft (72) being coupled to at least one wiper blade (74), said device for controlling comprising:

   - a device for detecting (61) the angular position of the output shaft of the motor,
   - an electronic control unit (1):

      • comprising inputs for receiving signals delivered by the device for detecting,
      • suited to be able to deliver control signals of the electrical power supply of the motor such that the output shaft of the motor (71) follows, in chronological order, in each direction of rotation of the output shaft (72) of the motor, along a course of travel located between a first final angular position, referred to as the starting position, according to this direction of rotation of the output shaft (72) and the second final angular position, referred to as the target position, in which the motor is controlled by the electronic unit to change the direction of rotation:

- an acceleration stage between the starting position and an intermediate position, referred to as the end of acceleration position, located between the starting position and the target position according to this direction of rotation,
- a deceleration stage between said end of acceleration position and the target position,

**characterised in that** the electronic control unit (1) is suitable to deliver control signals of the electrical power supply of the motor according to at least two separate speed control laws along at least two successive sections of travel of at least one of the acceleration and deceleration stages.

Fig 1

Fig 2

Fig 3

Fig 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6281649 B

- FR 2896925 A